Europäisches Patentamt

European Patent Office

Office européen des brevets

(11) Publication number: **0 502 364 A1**

# EUROPEAN PATENT APPLICATION

(21) Application number: **92102801.5**

(22) Date of filing: **20.02.92**

(51) Int. Cl.⁵: **G02F 1/133,** //A61B5/00

(30) Priority: **04.03.91 US 663388**

(43) Date of publication of application:
**09.09.92 Bulletin 92/37**

(84) Designated Contracting States:
**DE FR GB IT**

(71) Applicant: **MILES INC.**
**One Mellon Center 500 Grant Str.**
**Pittsburgh, PA 15219-2502(US)**

(72) Inventor: **Collister, Kenneth D.**
**130 W. Beardsley**
**Elkhart, Indiana 46514(US)**

(74) Representative: **Kirchner, Dietrich, Dr. et al**
**c/o BAYER AG Konzernverwaltung RP**
**Patentabteilung**
**W-5090 Leverkusen, Bayerwerk(DE)**

(54) **Shielded liquid crystal display element and circuitry.**

(57) A liquid crystal display (12) that minimizes disabling due to static electricity includes a rear polarizer and reflector (18), a front polarizer (30), and a display element (20,22) positioned between the rear polarizer and reflector (18) and the front polarizer (30). A transparent conductor (24) such as an indium tin oxide coating is deposited on the display element (20,22) between the display element and the front polarizer (30). The transparent conductor (24) is connected to electrical ground (26) to drain or dissipate any static electric charge applied to the display element (20,22). This dissipation of static electricity minimizes damage to the liquid crystal display (12) and disruption of the operation of the liquid crystal display (12).

FIG. I

## Background Of The Invention

### 1. Field of the Invention

The present invention relates to a new and improved liquid crystal display from which static electricity is dissipated preventing damage to the liquid crystal display, its elements and circuitry.

### 2. Background of the Prior Art

Liquid crystal displays are typically very sensitive to static electric charges. This becomes a problem when a liquid crystal display (LCD) is included in instruments such as those used by patients to measure analyte levels (i.e., glucose, etc.) in their blood. When such a user touches or rubs the liquid crystal display in the instrument, a static electric charge builds up on the display causing it to turn it dark. It can take ten to twenty minutes for the static electric charge to bleed off and for the LCD to return to normal. Often times the user, upon seeing the liquid crystal display turn dark, believes that the instrument has a malfunction and contacts the manufacturer. These unnecessary calls result in customer dissatisfaction and increased cost of service. With static electricity there also can be an electrostatic discharge which can damage the electronics of an instrument. In addition, there can be instrument EMI-RFI emissions and susceptibility that result from static electricity and related charges.

In other art, electrical bridges have been used to minimize or eliminate the damage resulting from static electric charges. For example, in United States Patent No. 4,820,022, discharging electrodes provided at the electrodes of a liquid crystal are used to prevent static electricity build up on a liquid crystal anti-dazzle mirror. The discharging electrodes are positioned adjacent to a grounding electrode.

Use of an insulator or insulating film over a liquid crystal display is described in Japanese Patent No. 1-259318. The insulator film prevents disorders of the liquid crystal display orientation by static electricity generated during manufacturing and specifically during the rubbing treatment.

The use of short circuiting strips formed to provide a short circuit path between two adjacent electrode segments of a liquid crystal display is disclosed in United States Patent No. 4,457,588. In this patent a liquid crystal display includes an electrode segment structure comprising at least two adjacent electrode segments and one or more short circuiting strips formed to provide a short circuiting path between the two adjacent segments.

In the Japanese Patent No. 63-46415, a thin film liquid crystal display panel for a television that has a static electricity discharge pattern on common electrodes of a thin film transistor matrix is described.

The use of indium oxide doped with tin oxide to provide electrode geometries in electro-optical displays of liquid crystals is disclosed in an article entitled "The Sputtered Indium Tin Oxide Film" by Vance Hoffman appearing in the November, 1978 issue of Optical Spectra, at pages 60-62. This article discusses techniques of sputtering indium tin oxide and a statement as to uses such as on surfaces for which static electrical charges must be bled off as in electrical meter panels.

None of these references discloses a simple, efficient technique for dissipating static electricity build up on a liquid crystal display employed in a sensitive electronic instrument such as an instrument used to measure the level of glucose in a patient's blood. It would be desirable to provide such a procedure that is efficient and inexpensive.

### 3. Summary of the Invention

The present invention is directed to a new and improved liquid crystal display that allows dissipation of static electric charges from the liquid crystal display when it is used on an instrument such as an instrument to measure the level of glucose in the blood of a patient. In the present invention, the solution to the problem of build up of static electricity is provided by coating the top surface of a liquid crystal display used in an electronic instrument with a transparent conductor such as that provided by a coating of indium tin oxide. This coating is connected to electrical ground thereby allowing static electric charges built up on the liquid crystal display to be bled off to the ground. By dissipating static electricity, disruption of the operation of the liquid crystal display and damage to the electronics of the instrument are avoided.

### BRIEF DESCRIPTION OF THE DRAWINGS

Other objects and advantages of the present invention will become apparent upon reading the following detailed description and upon reference to the drawings in which:

FIG. 1 is a schematical illustration of a liquid crystal display element including a transparent conductor and a grounding surface constructed in accordance with the principles of the present invention; and

FIG. 2 is a top plan view of an instrument which includes a liquid crystal display constructed in accordance with the principles of the present invention.

### DETAILED DESCRIPTION OF PREFERRED EMBODIMENT

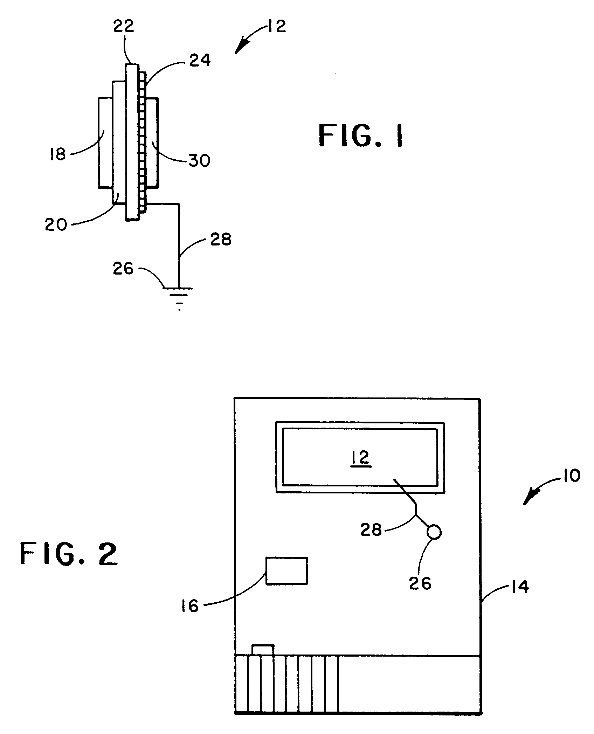

In FIGS. 1 and 2 there is illustrated an electronic instrument generally designated by the reference numeral 10. For example, the electronic instrument 10 may be an instrument for measuring the level of glucose in a user's blood. The instrument 10 includes a liquid crystal display (LCD) generally designated by the reference numeral 12. The liquid crystal display 12 is intended to display data such as the level of glucose in the user's blood or the time expired in running a test for determining the level of glucose in a user's blood. The instrument 10 has a housing 14 within which the liquid crystal display 12 is mounted and an on/off switch 16 positioned in the housing 14 for turning the instrument 10 on and off.

If a user of instrument 10 has static electricity from walking across a carpet or sliding in a chair, upon touching the liquid crystal display 12, it can be disabled. When this occurs, the liquid crystal display becomes dark until the static electric charge transferred from the user to the liquid crystal display 12 bleeds off. This can take ten to twenty minutes, and during that period of time the user often concludes that the instrument 12 is inoperable. The instrument is then returned for repair. Upon receipt of the returned instrument 10, the manufacturer typically discovers that the static electric charge has bled off and the liquid crystal display 12 is operative. The instrument is then returned to the user resulting in a period of non-use and dissatisfaction with the instrument by the user, and unnecessary expense to the manufacturer.

A solution to the problems caused by static electricity on the liquid crystal display 12 is to coat the liquid crystal display 12 with a transparent conductor and to connect that transparent conductor to electrical ground. This connection will bleed off a static electric charge.

A liquid crystal display element 12 with a transparent conductor is best illustrated in FIG. 1. The liquid crystal display element 12 includes a rear polarizer and rear reflector 18. The rear polarizer and rear reflector 18 is secured to a first substrate 20. A second substrate 22 abuts the first substrate 20. Together the first substrate 20 and the second substrate 22 form a display element. Specifically, reflective fluid is contained between the first substrate 20 and the second substrate 22. The front surface of the second substrate 22 is coated with a transparent conductor material or film 24. The transparent conductor 24 may be any known material, but preferably it is indium tin oxide. The transparent conductor material 24 is connected to an electrical ground 26 by an electrical conductor 28 such as an electrical wire or a carbon plug. The electrical ground 26 may be connected to the housing of the instrument 10. This connection to the electrical ground 26 allows any static electric charge on the transparent conductor 24 to be drained to the electrical ground 26.

The transparent conductor 24 shields the liquid crystal display element 12 from static electric charges that can disrupt the function of the liquid crystal display 12. In addition, the transparent conductor 24 provides a ground plane path for electrostatic discharge that could damage the electronic components of the instrument 10 thereby shielding the electronic circuits connected or adjacent to the liquid crystal display. Also, the transparent conductor 24 reduces both the instrument EMI and RFI emissions and susceptibility and shields the electronic circuits from Electromagnetic Interference, Radio Frequency Interference and Electro Static Discharge.

To complete the liquid crystal display element 12, a front polarizer 30 is mounted onto the front surface of the second substrate 22 and over the transparent conductor 24.

The instrument 10 with the transparent conductor 24 coupled to the electrical ground 26 was tested by being touched with a HV static probe of 10kV-30kV with no adverse affect. The electrical conductor 28 was then disconnected from the transparent conductor 24, and again the liquid crystal display 12 was touched with the HV static probe. The liquid crystal display 12 turned dark. The electrical conductor 28 was reconnected to the transparent conductor 24 and the liquid crystal display 12 cleared up. This procedure illustrates that the connection of the transparent conductor 24 to an electrical ground 26 quickly dissipates any static electric charge on the liquid crystal display 12 avoiding the problem of disabling the liquid crystal display 12 when touched by a user carrying a static electric charge.

**Claims**

1.  A shielded display element, comprising:
    rear polarizer and reflector;
    a front polarizer;
    a display element positioned between said rear polarizer and reflector and said front polarizer;
    a transparent conductor on said display element; and
    an electrical conductor connecting said transparent conductor to electrical ground.

2.  The shielded display element set forth in Claim 1, wherein said transparent conductor comprises an indium tin oxide coating on said display element.

**3.** The shielded display element set forth in Claim 1, wherein said transparent conductor comprises an indium tin oxide coating deposited on said display element between said display element and said front polarizer.

**4.** The shielded display element set forth in Claim 1, wherein said electrical conductor comprises an electrical wire.

**5.** The shielded display element set forth in Claim 1, wherein said electrical conductor comprises a carbon plug.

**6.** A liquid crystal display, comprising:

a rear polarizer;

a front polarizer;

a liquid crystal element mounted between said rear polarizer and said front polarizer;

a coating of indium tin oxide on said liquid crystal element; and

an electrical grounding element coupled to said coating of indium tin oxide.

**7.** A liquid crystal display element, comprising:

a front substrate;

a rear substrate;

a liquid crystal fluid between said front substrate and said rear substrate;

a transparent conductor on the front of said front substrate; and

an electrical ground coupled to said transparent conductor.

**8.** The liquid crystal display element set forth in Claim 7, wherein said transparent conductor comprises a coating of indium tin oxide deposited on said front substrate.

**9.** A liquid crystal display, comprising:

a housing;

an electrical ground;

a liquid crystal element mounted in said housing;

a transparent electrical conductor on said liquid crystal element; and

an electrical conductor connecting said transparent electrical conductor to said electrical ground.

**10.** The liquid crystal display set forth in Claim 9, wherein said transparent electrical conductor comprises a transparent conductive film.

FIG. 1

FIG. 2

| DOCUMENTS CONSIDERED TO BE RELEVANT | | EP 92102801.5 |

| Category | Citation of document with indication, where appropriate, of relevant passages | Relevant to claim | CLASSIFICATION OF THE APPLICATION (Int. Cl.5) |
|---|---|---|---|
| A | US - A - 4 602 850 (DEBENEDETTI) * Column 1, lines 24-59; column 3, line 4 - column 4, line 54 * | 1,4,6, 7,9 | G 02 F 1/133 //A 61 B 5/00 |
| D,A | US - A - 4 820 022 (DEMURA et al.) * Column 1, lines 26-44; fig. 1,2 * | 1,4,6, 7,9 | |
| D,A | US - A - 4 457 588 (YASUKAWA) * Column 1, lines 18-25; column 2, line 21 - column 3, line 11 * | 1,6,7, 9 | |
| A | EP - A - 0 216 236 (MISUBISHI RAYON) * Claims 1,2,6,7; page 9, lines 25-37 * | 1,2,7, 8,9,10 | |
| A | US - A - 4 292 370 (PEKKO) * Fig. 2 * | 1,6,7, 9 | TECHNICAL FIELDS SEARCHED (Int. Cl.5) G 02 F 1/00 A 61 B 5/00 |

The present search report has been drawn up for all claims

| Place of search | Date of completion of the search | Examiner |
|---|---|---|
| VIENNA | 05-06-1992 | GRONAU |

EPO FORM 1503 03.82 (P0401)